(19) Europäisches Patentamt
European Patent Office
Office européen des brevets

(11) **EP 4 105 856 A1**

(12) **EUROPEAN PATENT APPLICATION**
published in accordance with Art. 153(4) EPC

(43) Date of publication:
**21.12.2022 Bulletin 2022/51**

(21) Application number: **21929417.0**

(22) Date of filing: **22.03.2021**

(51) International Patent Classification (IPC):
*G06Q 10/00* $^{(2012.01)}$

(52) Cooperative Patent Classification (CPC):
**G06Q 10/00**

(86) International application number:
**PCT/CN2021/082147**

(87) International publication number:
**WO 2022/198404 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **LIU, Zhen
Shanghai 200333 (CN)**
• **PANG, Jianguo
Shanghai 200000 (CN)**
• **CHEN, Weigang
Shanghai 200135 (CN)**

(74) Representative: **Isarpatent
Patent- und Rechtsanwälte Barth
Charles Hassa Peckmann & Partner mbB
Friedrichstrasse 31
80801 München (DE)**

(54) **METHOD FOR EVALUATING REMAINING LIFE OF COMPONENT, FUNCTIONAL MODULE AND SYSTEM**

(57) The present invention provides a remaining life assessment method, apparatus, and system for an electronic system, where the electronic system includes at least one electronic component. The remaining life assessment method for the electronic system includes the following steps: S1: acquiring stress information of the electronic system every time interval, and aggregating data of the stress information within a time period to obtain a stress factor; S2: obtaining a failure rate of each component of the system based on the stress factor and a failure rate algorithm, thereby calculating a failure rate of the system; S3: obtaining the reliability life of the system based on the failure rate of the system and a mean time between failures of the system, to obtain a cumulative damage rate of the system within the time period; and S4: calculating the remaining life of the system based on the nominal life or fatigue life of the system. The present invention has good scalability and low cost, and can not only predict the remaining life of the electronic system in real time, but can also detect unexpected situations in the operation of the electronic system.

FIG. 2

EP 4 105 856 A1

**Description**

**TECHNICAL FIELD**

The present invention relates to the field of predictive maintenance, and in particular to a remaining life assessment method, apparatus, and system for an element, a functional module, and a system.

**BACKGROUND**

Predictive maintenance or condition-based maintenance is a more effective maintenance strategy than reactive and preventive maintenance. Predictive maintenance, or condition-based maintenance, is more targeted and based on a diagnostic assessment of factors such as age of equipment and environmental stress. Therefore, remaining useful life (RUL) is a key step in predictive maintenance. Predictive maintenance is performed on objects including a component, a unit (a module circuit), and a system, mainly to diagnose their status and determine their service life.

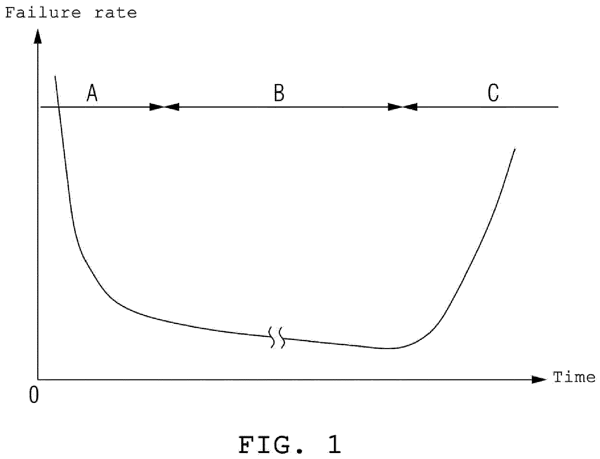

The remaining useful life is based on a failure status (an empirical or physical model) and/or an operation or a component, a unit (a module circuit), and a system environmental condition. FIG. 1 shows a failure rate curve, namely, a bathtub curve, with its horizontal coordinate being time, and its vertical coordinate being a failure rate. The failure rate curve includes an early failure phase A, a random failure phase B, and a wear-out phase C. For electronics, the early failure phase A occurs mainly in a pre-delivery inspection performed when the product is in the factory, that is, after the initialization of the semiconductor device. The present invention is applicable to the random failure phase B, in which excessive stress (such as power surges) is considered to occur randomly. Specifically, the product becomes unreliable after being used for a period of time, and the remaining life is determined. The wear-out phase C is related to the intrinsic life due to wear and failures. When a device encounters a wear-out phase failure, the failure rate tends to increase immediately.

Prediction of the remaining useful life is reflected mainly by the length of the remaining time of the random failure phase, or the wear or aging of the component, unit (module circuit), and system based on usage. The remaining useful life of the same device varies in different environmental and execution conditions.

One solution in the prior art is to provide a remaining life prediction method for a power system of an electronic device in a power plant, which includes a sensor that collects data and predicts life based on an aging model. The aging model, such as Palmgren-Miner, Arrhenius and Coffin-Manson, or Eyring, is used to calculate the remaining life of the system.

Another solution in the prior art is to detect the aging of the electronic device based on device and environmental conditions. The solution uses data collected from sensors, such as a temperature sensor and a vibration sensor. The solution then calculates an aging acceleration factor based on an algorithm related to acceleration factors of the device and environmental conditions to assess the remaining life of the device.

**SUMMARY**

A first aspect of the present invention provides a remaining life assessment method for an electronic system, where the electronic system includes at least one electronic component. The remaining life assessment method for the electronic system includes the following steps: S1: acquiring stress information of the electronic system every time interval, and aggregating data of the stress information within a time period to obtain a stress factor, where the stress factor is the impact of the stress information on the component; S2: obtaining a failure rate of each component of the system based on the stress factor and a failure rate algorithm, thereby calculating a failure rate of the system; S3: obtaining the reliability life of the system based on the failure rate of the system and a mean time between failures of the system, to obtain a cumulative damage rate of the system within the time period; and S4: calculating the remaining life of the system based on the nominal life or fatigue life of the system.

Further, the component includes a resistor, a capacitor, a diode, and a transistor, and the stress information includes an ambient temperature, a voltage, and a power of the resistor, an ambient temperature, a voltage, and a power of the capacitor, an ambient temperature and a junction temperature of the diode, and an ambient temperature and a junction temperature of the transistor.

Further, the remaining life assessment method for the electronic system further includes the following step: determining that the time period is a time period when a variation range of the stress factor reaches a variation threshold of the stress factor.

Further, the failure rate algorithm includes an Arrhenius model, an inverse power law model, or an Eyring model.

Further, step S2 further includes the following steps:

when the system is a serial architecture, the failure rate of the system is $\lambda_{sys} = \sum_{i=0}^{n} \lambda_i$, where $\lambda_i$ is the failure rate of the component, and n is a number of components of the system; and

when the system is a parallel architecture, the failure rate of the system is

$$\lambda_{sys} = \frac{1}{\sum_{i=0}^{n}\frac{1}{\lambda_i} - \sum_{1<i<j<n}\frac{1}{\lambda_i+\lambda_j} + \cdots + (-1)^{n-1}\frac{1}{\lambda_1+\lambda_2+\cdots+\lambda_n}}$$

, where $\lambda_1$, $\lambda_2$, $\lambda_i$, $\lambda_i$, $\lambda_j$ and $\lambda_n$ are failure rates of components, and n is the number of components of the system.

Further, the reliability life of the system is:

$$t_R = \frac{\ln[R(t_R)]}{\lambda_{sys}},$$

where $R(t_R)$ is the reliability of the system, and $\lambda_{sys}$ is the failure rate of the system.

Further, the cumulative damage rate of the system within the time period is:

$$D_{tn} = D_{tn-1} + \frac{T_n}{t_R},$$

where $D_{tn-1}$ is a cumulative damage rate of the system within a previous time period, and $t_R$ is the reliability life of a system with reliability R, a value of the reliability R ranging from 0% to 100%.

Further, the remaining life of the system is:

$$RUL = L_{R,nom} \times (1 - D_{tn})$$

where $L_{R,nom}$ is the nominal life of a system with reliability R, a value of the reliability R ranging from 0% to 100%; and $D_{tn}$ is the cumulative damage rate of the system within the time period.

Further, the remaining life of the system is:

$$RUL = L_{R,fatigue} \times (1 - D_{tn}),$$

where $L_{R,fatigue} = \frac{T_{total\_operation}}{D_{tn}}$, and $L_{R,fatigue}$ is the fatigue life of a system with reliability R, the fatigue life being related to the reliability of the system, and a value of the reliability R ranging from 0% to 100%; $D_{tn}$ is the cumulative damage rate of the system within the time period; and $T_{total\_operation}$ is a total operation time of the system.

A second aspect of the present invention provides a remaining life assessment system for an electronic system, where the electronic system includes at least one electronic component. The remaining life assessment system for the electronic system includes: a processor; and a memory coupled to the processor, where the memory stores instructions that, when executed by the processor, cause the electronic device to perform actions including: S1: acquiring stress information of the electronic system every time interval, and aggregating data of the stress information within a time period to obtain a stress factor, where the stress factor is the impact of the stress information on the component; S2: obtaining a failure rate of each component of the system based on the stress factor and a failure rate algorithm, thereby calculating a failure rate of the system; S3: obtaining the reliability life of the system based on the failure rate of the system and a mean time between failures of the system, to obtain a cumulative damage rate of the system within the time period; and S4: calculating the remaining life of the system based on the nominal life or fatigue life of the system.

Further, the component includes a resistor, a capacitor, a diode, and a transistor, and the stress information includes an ambient temperature, a voltage, and a power of the resistor, an ambient temperature, a voltage, and a power of the capacitor, an ambient temperature and a junction temperature of the diode, and an ambient temperature and a junction temperature of the transistor.

Further, the remaining life assessment method for the electronic system further includes the following action:

determining that the time period is a time period when a variation range of the stress factor reaches a variation threshold of the stress factor.

Further, the failure rate algorithm includes an Arrhenius model, an inverse power law model, or an Eyring model.

Further, action S2 further includes:

when the system is a serial architecture, the failure rate of the system is $\lambda_{sys} = \sum_{i=0}^{n} \lambda_i$, where $\lambda_i$ is the failure rate of the component, and n is a number of components of the system; and

when the system is a parallel architecture, the failure rate of the system is

$$\lambda_{sys} = \frac{1}{\sum_{i=0}^{n} \frac{1}{\lambda_i} - \sum_{1<i<j<n}^{n} \frac{1}{\lambda_i + \lambda_j} + \cdots + (-1)^{n-1} \frac{1}{\lambda_1 + \lambda_2 + \cdots + \lambda_n}}$$

, where $\lambda_1$, $\lambda_2$, $\lambda_i$, $\lambda_i$, $\lambda_j$, **and** $\lambda_n$ are failure rates of components, and n is the number of components of the system.

Further, the reliability life of the system is:

$$t_R = \frac{\ln[R(t_R)]}{\lambda_{sys}},$$

where $R(t_R)$ is the reliability of the system, and $\lambda_{sys}$ is the failure rate of the system.

Further, the cumulative damage rate of the system within the time period is:

$$D_{tn} = D_{tn-1} + \frac{T_n}{t_R},$$

where $D_{tn-1}$ is a cumulative damage rate of the system within a previous time period, and $t_R$ is the reliability life of a system with reliability R, a value of the reliability R ranging from 0% to 100%.

Further, the remaining life of the system is:

$$RUL = L_{R,nom} \times (1 - D_{tn})$$

where $L_{R,nom}$ is the nominal life of a system with reliability R, a value of the reliability R ranging from 0% to 100%; and $D_{tn}$ is the cumulative damage rate of the system within the time period.

Further, the remaining life of the system is:

$$RUL = L_{R,fatigue} \times (1 - D_{tn}),$$

where $L_{R,fatigue} = \frac{T_{total\_operation}}{D_{tn}}$, and $L_{R,fatigue}$ is the fatigue life of a system with reliability R, the fatigue life being related to the reliability of the system, and a value of the reliability R ranging from 0% to 100%; $D_{tn}$ is the cumulative damage rate of the system within the time period; and $T_{total\_operation}$ is a total operation time of the system.

A third aspect of the present invention provides a remaining life assessment apparatus for an electronic system, where the electronic system includes at least one electronic component. The remaining life assessment apparatus for the electronic system includes: an acquisition apparatus, which acquires stress information of the electronic system every time interval, and aggregates data of the stress information within a time period to obtain a stress factor, where the stress factor is the impact of the stress information on the component; a first computing apparatus, which obtains a failure rate of each component of the system based on the stress factor and a failure rate algorithm, thereby calculating a failure rate of the system; an obtaining apparatus, which obtains the reliability life of the system based on the failure rate of the system and a mean time between failures of the system, to obtain a cumulative damage rate of the system within the time period; and

a second computing apparatus, which calculates the remaining life of the system based on the nominal life or fatigue life of the system.

The present invention is capable of assessing an aging level of the electronic system, which can provide important information for decisions on system maintenance planning. The present invention utilizes an online condition monitoring circuit to assess the remaining life in real time. The present invention utilizes a variable time period $T_n$ to calculate the remaining life of the system to reduce the prediction of the useful life consumption of the electronic device. The present invention can perform a basic function only by using a parameter provided by the manual or the supplier, and therefore it is convenient to use. The present invention can not only calculate the remaining life of the electronic system, but can also detect unexpected situations of the electronic component and trigger an alarm in a timely manner. The present invention can be combined with edge/production line equipment and an industrial cloud, and a user can perform detection with a mobile phone or tablet app and a personal computer. Moreover, the present invention is more scalable and easier to update.

In addition, the present invention has a lower cost, and can be integrated into an existing industrial product, even an existing product with only a basic temperature measurement function. The present invention can reduce the complexity of a detection unit. The prediction of the remaining life of the electronic system of the present invention is implemented based on average conditions, and the present invention can also detect unexpected situations during the working process of the system to detect an extreme state of the system. The data used in the present invention is within a time period that is variable, and an assessment result is updated based on the variable period.

## BRIEF DESCRIPTION OF THE DRAWINGS

FIG. 1 shows a failure rate curve;
FIG. 2 is a schematic structural diagram of a remaining life assessment system for an electronic system according to a specific embodiment of the present invention;
FIG. 3 shows a graph of a stress factor versus time, when time periods $T_n$ are equal, of a remaining life assessment method for an electronic system according to a specific embodiment of the present invention;
FIG. 4 is a schematic diagram of a relationship between a stress factor and an ambient temperature, when a variation range threshold $\Delta \pi_T$ of the stress factor is constant, of a remaining life assessment method for an electronic system according to a specific embodiment of the present invention;
FIG. 5 is a schematic diagram of a relationship between an ambient temperature and a system operation time of a remaining life assessment method for an electronic system according to a specific embodiment of the present invention; and
FIG. 6 shows a graph of a relationship between the remaining life and a cumulative damage rate of a remaining life assessment method for an electronic system according to a specific embodiment of the present invention.

## DETAILED DESCRIPTION

Specific embodiments of the present invention are described below in conjunction with the accompanying drawings.

The present invention provides a remaining life assessment method, apparatus, and system for an electronic system.

A first aspect of the present invention provides a remaining life assessment method for an electronic system, where the electronic system includes at least one electronic component. The method includes the following steps:

First, step S1 is performed to acquire stress information of the electronic system every time interval $\Delta t_{sensor}$, and aggregate data of the stress information within a time period $T_n$ to obtain a stress factor, where the stress factor is the impact of the stress information on the component.

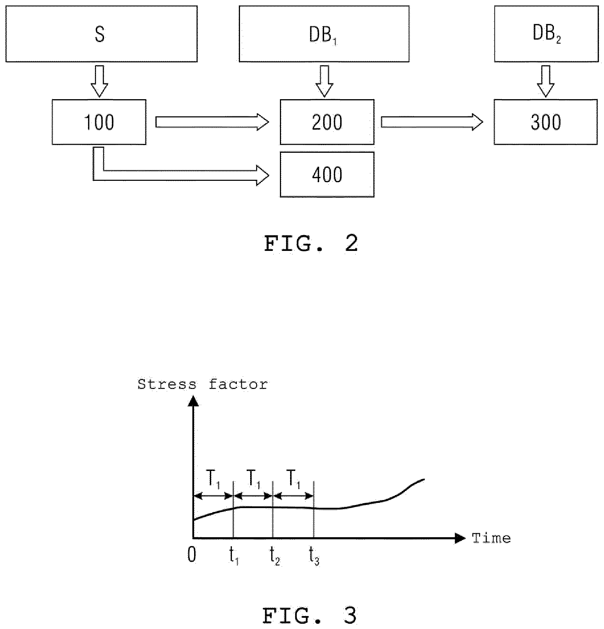

As shown in FIG. 2, the present invention provides a remaining life assessment system for an electronic system, the remaining life assessment system including a stress detection apparatus 100, a cumulative damage calculation apparatus 200, a remaining life assessment apparatus 300, and an alarm apparatus 400. Specifically, the stress detection apparatus 100 is configured to detect environmental and operational stresses, where the environmental stress includes temperature, etc., and the operational stress includes voltage and current information and a number of operations, etc. The above-mentioned stress is obtained by a field sensor S. The cumulative damage calculation apparatus 200 calculates, by using some preset algorithms, a cumulative damage level of the electronic system based on a damage rate of the electronic system and according to the stress information obtained by the stress detection apparatus 100, where an architecture of the system may be serial or parallel or the like. Finally, the remaining life assessment apparatus 300 performs remaining life prediction based on the cumulative damage rate and according to the nominal life of an electronic part of the electronic system known in advance. The alarm apparatus 400 detects usage of the electronic system outside an allowable usage range. For example, an operating temperature range of the system is specified to be approximately 70°C. However, sometimes the system operates outside the range, for example, operates at 100°C. Therefore, the alarm apparatus 400 calculates a cumulative time and issues an alarm. The remaining life assessment apparatus 300 characterizes the damage degree of the system based on detection in average conditions, and the situation where the alarm apparatus 400 issues an alarm is an extreme case in the working process. A first database $DB_1$ prestores an element failure rate algorithm and the system architecture. The system architecture is parallel or serial. A second database $DB_2$ prestores the nominal life of the system.

Moreover, although the remaining life assessment apparatus 300 is based on the detection in the average conditions, the electronic component has specific operating conditions, such as a temperature range or a maximum voltage value. In the process of the remaining life prediction, although the element operates outside the usage conditions, this cannot be reflected by the remaining life assessment. Therefore, the alarm apparatus 400 takes such situations outside the usage conditions into consideration. For example, if a system operates at 180°C for 100 hours, the remaining life of the system will be reduced by 10,000 hours. Therefore, the life reduction has little effect on the overall 20-year life of the system. In such cases, however, for some components, a maximum operating temperature limit is exceeded, and therefore it is very important to record relevant data and issue an alarm under critical conditions. Therefore, in the present invention, a cumulative time of an extreme case of each critical element is recorded, and when the cumulative time exceeds a predetermined threshold, an alarm will be triggered by means of communication or an HMI.

The sensor S is connected to the electronic system. The stress information includes environmental stress information and operational stress information. For example, the environmental stress information includes temperature, etc., where the temperature is acquired by a temperature sensor. The operational stress information includes voltage and current stress information and a number of operations, etc., where the voltage stress information is acquired by a voltage sensor, and the current stress information is acquired by a current sensor. Preferably, the time interval $\Delta t_{sensor}$ is fixed, and its value, for example, ranges from 1 min to 5 min. The acquired stress data is stored in a memory. Optionally, in the present invention, all elements in the system may be detected, or only a critical element that has a shorter mean time between failures in each type of element in the system may be detected. There are many elements in each system. A longer mean time between failures indicates that the component is more reliable, and a shorter mean time between failures indicates that the component is less reliable. Therefore, only the critical element, i.e., a component having a shorter mean time between failures, may be detected. For example, aluminum electrolytic capacitors among all capacitors may be detected. Alternatively, in the present invention, a component in the most sensitive sub-circuit in the system may be detected. The critical component may be selected based on a system analysis that includes the calculation of the mean time between failures.

Based on the analysis of circuit design, a resistor, a capacitor, a diode, and a transistor are main components in a circuit. Further, the component includes a resistor, a capacitor, a diode, and a transistor, and the stress information includes an ambient temperature, a voltage, and a power of the resistor, an ambient temperature, a voltage, and a power of the capacitor, an ambient temperature and a junction temperature of the diode, and an ambient temperature and a junction temperature of the transistor.

Specifically, stress information for the diode includes a current, a forward voltage, and an ambient temperature, because the junction temperature of the diode is characterized by the current. The junction temperature of the diode is $\theta_{junction} = \theta_{ambient} + I \times V_F \times R_{th}$, where $V_F$ is the forward voltage, $R_{th}$ is a thermal resistance, and $\theta_{ambient}$ is the ambient temperature. For the transistor, in addition to a current of the transistor, a forward voltage of a body diode in the transistor also needs to be detected. The forward voltage can characterize the junction temperature of the transistor based on a curve of a voltage versus a junction temperature.

Therefore, a stress factor of the diode corresponding to the temperature is:

$$\pi_T = \frac{A \times e^{E_{a1} \times z} + (1-A) \times e^{E_{a1} \times z}}{A \times e^{E_{a1} \times z_{ref}} + (1-A) \times e^{E_{a2} \times z_{ref}}}$$

where $z = 11605 \times \left(\frac{1}{T_{U,ref}} - \frac{1}{T_2}\right)$ , $z_{ref} = 11605 \times \left(\frac{1}{T_{U,ref}} - \frac{1}{T_1}\right)$ , $T_{U,ref}$ is a reference room temperature, $T_1$ is a reference junction temperature, $T_2$ is an actual junction temperature, and A, Ea1, and Ea2 are constants.

Optionally, to integrate basic temperature measurement into an existing product, only temperature data can be monitored online, and other stresses are predicted based on circuit design and test data.

A further advantage of the present invention lies in that the data of the stress information within a time period $T_n$ is processed. There are two methods for selecting the time period $T_n$, in one of which the time period $T_n$ is a fixed value, that is, $T_1 = T_2 = T_3 \ldots = T_n$. The time period $T_n$ is far greater than the time interval $\Delta t_{sensor}$. For example, $\Delta t_{sensor}$ is 1 min or 5 min, and the time period $T_n$ is 12 hrs or 24 hrs. Optionally, the fixed value of $T_n$ is not the only value thereof. For example, $T_n$ varies depending on the season. Specifically, the ambient temperature does not change drastically in spring and fall, and therefore $T_n$ is longer; the temperature changes significantly in winter and summer, and $T_n$ is shorter due to a higher temperature. Moreover, the data of the stress information within the time period $T_n$ can also be processed using a mean-value method.

FIG. 3 shows a graph of a stress factor versus time, when the time periods $T_n$ are equal, of a remaining life assessment method for an electronic system according to a specific embodiment of the present invention. As shown in FIG. 3, the horizontal coordinate is time t, and the vertical coordinate is a stress factor $\pi$, where time periods $T_n$ are equal, that is, $T_n = T_1 = t_1 - 0 = t_2 - t_1 = t_3 - t_2$.

Further, the remaining life assessment method for the electronic system further includes the following step: determining that the time period is a time period when a variation range of the stress factor reaches a variation threshold of the stress factor. Specifically, the time period $T_n$ is a variable period, and the time period $T_n$ is based on a group of preset stress variation thresholds. Specifically, a variation range of a stress threshold is preset, and only when the stress variation range reaches a threshold, for example, when the stress variation range reaches a 5% or 10% variation, a time interval for the time period $T_n$ starts to be confirmed. For example, a variation range threshold $\Delta\pi_T$ of the stress factor is 5%. If the stress changes slowly and reaches the threshold after one month, the time period $T_n$ may be one month. For example, if the stress changes significantly, the time period $T_n$ may be 10 min.

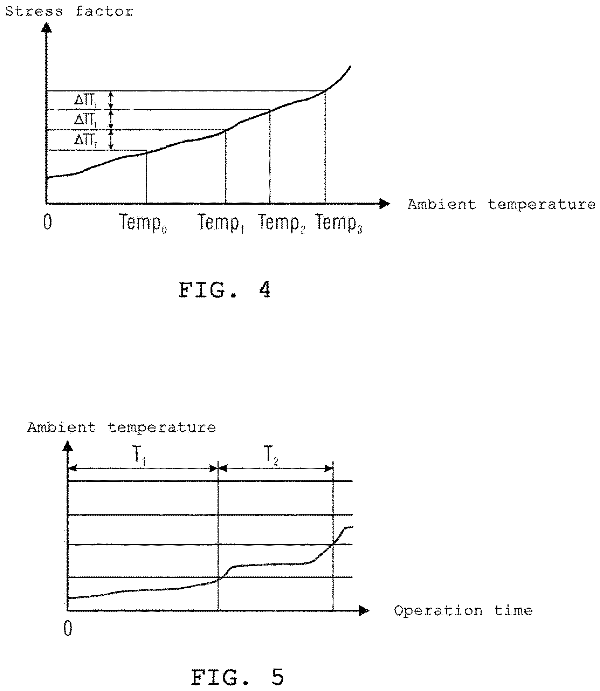

FIG. 4 is a schematic diagram of a relationship between a stress factor and an ambient temperature, when a variation range threshold $\Delta\pi_T$ of the stress factor is constant, of a remaining life assessment method for an electronic system according to a specific embodiment of the present invention, where the variation range threshold $\Delta\pi_T$ of the stress factor is constant, the horizontal coordinate is the ambient temperature, and the vertical coordinate is the stress factor. As shown in FIG. 4, the ambient temperature is a dominant stress of an element, and therefore the stress factor $\pi_T$ is a function of the ambient temperature, that is, an acceleration factor of the ambient temperature. The variation threshold $\Delta\pi_T$ of the stress factor is a temperature-based function and is a preset value that represents a stress variation level. For example, the factor $\pi_T$ has a 5% or 10% variation. Therefore, thresholds for a group of ambient temperatures are determined based on: $\pi_T = f(Temp)$, where Temp is an ambient temperature, and then

$$Temp_0 = f^{-1}(\Delta\pi_T)$$
$$Temp_1 = f^{-1}(2 \times \Delta\pi_T)$$
$$...$$
$$Temp_n = f^{-1}\big((n+1) \times \Delta\pi_T\big)$$

FIG. 5 is a schematic diagram of a relationship between an ambient temperature and a system operation time of a remaining life assessment method for an electronic system according to a specific embodiment of the present invention. As shown in FIG. 5, the horizontal coordinate is an operation time, and the vertical coordinate is an ambient temperature. The ambient temperature varies with the system operation time within time periods $T_1$ and $T_2$.

Optionally, the time period $T_n$ is based on a group of preset thresholds for the dominant stress. When a value of the ambient temperature reaches a related threshold, the time period $T_n$ is recorded. This means that the stress has a great effect within the time period $T_n$. Stresses within the time period $T_n$ are processed using a mean-value method, that is, the sum of n stresses is divided by n. Because the time period $T_n$ is a variable value, the calculation of the remaining life consumption is greatly reduced. Moreover, to improve sensitivity of the remaining life, when the aging level is very high, e.g., up to 80% or higher, the value of the time period $T_n$ needs to be reduced. A client should determine a maintenance plan in a timely manner.

Then, step S2 is performed to obtain a failure rate of each component of the system based on the stress factor and a failure rate algorithm, thereby calculating a failure rate of the system. Preferably, the failure rate algorithm includes an Arrhenius model, an inverse power law model, or an Eyring model.

For example, a failure rate of a component is $\lambda_{comp} = \lambda_{ref}\pi_{stress\ 1}\pi_{stress\ 2} \cdots \pi_{stress\ n}$, where $\lambda_{ref}$ is a reference failure rate of the component, and $\pi_{stress1}$ is a stress factor, such as temperature stress and voltage stress. The stress factor is calculated based on data from the detection apparatus. The above algorithm can be performed based on a data table, an algorithmic function, or the like.

Then the failure rate of the component $\lambda_i$ is calculated. Failure rates of all components in the system are calculated based on the above algorithm. Optionally, a failure rate of a critical component is first calculated, and then the failure rate can be utilized by other components of the same type in the system.

For example, a formula for calculating a failure rate of a diode is $\lambda = \lambda_{ref} \times \pi_D \times \pi_T$, where $\lambda_{ref}$ is a reference failure rate, $\pi_D$ is a drift sensitivity factor, and $\pi_T$ is a temperature stress factor.

Specifically, step S2 further includes the following steps:

when the system is a serial architecture, if any element in the system fails, the entire system will fail, and then the failure rate of the system is $\lambda_{sys} = \sum_{i=0}^{n} \lambda_i$ , where $\lambda_i$ is the failure rate of the component, and n is a number of components of the system; and

when the system is a parallel architecture, as long as not all the components of the system fail, the entire system can still work, and then the failure rate of the system is $\lambda_{sys} =$

$$\cfrac{1}{\sum_{i=0}^{n}\frac{1}{\lambda_i} - \sum_{1<i<j<n}^{n}\frac{1}{\lambda_i+\lambda_j} + \cdots + (-1)^{n-1}\frac{1}{\lambda_1+\lambda_2+\cdots+\lambda_n}},$$

where $\lambda_1$, $\lambda_2$, $\lambda_i$, $\lambda_j$, $\lambda_j$ *and* $\lambda_n$ are failure rates of components, and n is the number of components of the system.

Next, step S3 is performed to obtain the reliability life of the system based on the failure rate of the system and a mean time between failures of the system, to obtain a cumulative damage rate of the system within the time period.

The reliability life of the system is:

$$t_R = \frac{\ln[R(t_R)]}{\lambda_{sys}},$$

where $R(t_R)$ is the reliability of the system, and $\lambda_{sys}$ is the failure rate of the system.

The cumulative damage rate of the system within the time period is:

$$D_{tn} = D_{tn-1} + \frac{T_n}{t_R},$$

where $D_{tn-1}$ is a cumulative damage rate of the system within a previous time period, and $t_R$ is the reliability life of a system with reliability R, a value of the reliability R ranging from 0% to 100%.

Assuming that the failure rate reaches the life of the entire system at 90% reliability t0.9 within a period of time, both the failure rate and the reliability should be considered for the system under conditions of the reliability life $t_{0.9}$ and the time period $T_n$. However, based on a reliability curve, reliability of the mean time between failures is only 36.7%, which means that only 36.7% of the units can be dynamically implemented within their lifetime. Therefore, the present invention takes the reliability life $t_R$ into consideration. Preferably, a value of the reliability R is generally 90% or 95%, and then the reliability life is generally selected as $t_{0.9}$ or $t_{0.95}$.

Exponential distribution of the reliability life is a calculation method of life at a given reliability, and the system reliability is:

$$R(t_R) = e^{-\lambda tR},$$

$$\ln[R(t_R)] = -\lambda t_R,$$

$t_R = \frac{\ln[R(t_R)]}{\lambda}$ , where the value of the reliability R is generally 90% or 95%, and therefore

$$t_{0.90} = \frac{1}{\lambda}\ln\frac{1}{0.90} = MTTF \ln\frac{1}{0.90}$$

$t_{0.95} = \frac{1}{\lambda}\ln\frac{1}{0.95} = MTTF \ln\frac{1}{0.95}$ , where MTTF is the mean time between failures of the system, and therefore the cumulative damage rate of the system within the time period $T_n$ is:

$$D_{tn} = D_{tn-1} + \frac{T_n}{t_{0.90,Tn}}.$$

Finally, step S4 is performed to calculate the remaining life of the system based on the nominal life or fatigue life of the system.

The remaining life of the system is:

$$RUL = L_{R,nom} \times (1 - D_{tn})$$

where $L_{R,nom}$ is the nominal life of a system with reliability R, a value of the reliability R ranging from 0% to 100%; and $D_{tn}$ is the cumulative damage rate of the system within the time period.

The remaining life of the system is:

$$RUL = L_{R,fatigue} \times (1 - D_{tn}),$$

where $L_{R,fatigue} = \dfrac{T_{total\_operation}}{D_{tn}}$ , and $L_{R,fatigue}$ is the fatigue life of a system with reliability R, the fatigue life being related to the reliability of the system, and a value of the reliability R ranging from 0% to 100%; $D_{tn}$ is the cumulative damage rate of the system within the time period.

For example, the nominal life is $L_{0.90,nom}$, which is overall life with 90% reliability under nominal conditions, and is a fixed value calculated before a product release.

Therefore, $RUL = L_{0.90,nom} \times (1 - D_{tn})$.

Optionally, the fatigue life is $L_{0.90,fatigue}$, which is overall life with 90% reliability under mean stress conditions over the past time, and is variable over the execution time.

Therefore, $RUL = L_{0.90,fatigue} \times (1 - D_{tn})$ , where $L_{0.90,fatigue} = \dfrac{T_{total\_operation}}{D_{tn}}$ .

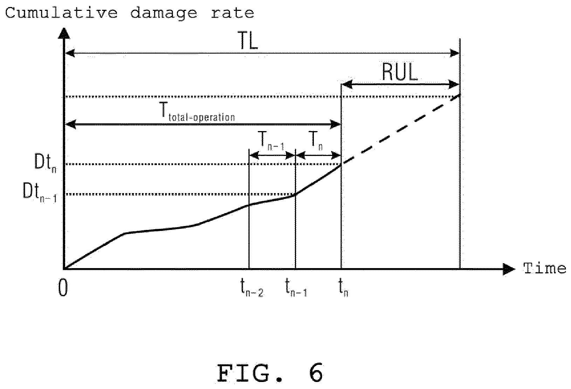

FIG. 6 shows a graph of a relationship between the remaining life and a cumulative damage rate of a remaining life assessment method for an electronic system according to a specific embodiment of the present invention, where the horizontal coordinate is time, the vertical coordinate is a cumulative damage rate, and the curve is the remaining life RUL of the system. The time period is $T_n = T_{n-1}$,

$$T_{n-1} = t_{n-1} - t_{n-2}, \quad T_n = t_n - t_{n-1},$$

At moment $t_{n-1}$, the cumulative damage rate is $D_{tn-1}$. At moment $t_n$, the cumulative damage rate is $D_{tn}$. The total operation time of the system is $T_{total\_operation}$, the total life of the system is TL, and therefore the remaining life is RUL.

During actual operation, the remaining life result is combined with the above two solutions with different weights. To be specific, at an early stage, a weight for the remaining life based on the nominal life is higher; however, as the aging increases, a weight for the remaining life based on the fatigue life increases.

The present invention is described below with reference to a practical application scenario, in which the present invention is applied to an elevator. A real-time stress sensor and a detection circuit are not affected by an ETU function. An edge/field device receives and executes a signal from the detection circuit and the sensor, and transmits the data to a cloud platform. The remaining life can be executed on either the field/edge device or the cloud platform. Parameters include critical component determination, critical stress determination, a fixed or variable time period $T_n$, and a damage rate algorithm. The above parameters are regularly optimized and upgraded on the cloud, and downloaded to the field/edge device.

Specifically, the above upgrade and optimization are based on real-time field stress data and artificial intelligence algorithms, where the artificial intelligence algorithms include machine learning or deep learning algorithms. Updated data includes new data provided by a component supplier, and a model includes a new physical failure model, etc. Test data and a target component/device include an MTTF under nominal conditions. The present invention can be integrated into a display unit and/or a smartphone app, and therefore it is convenient to use.

A second aspect of the present invention provides a remaining life assessment system for an electronic system, where the electronic system includes at least one electronic component. The remaining life assessment system for the electronic system includes: a processor; and a memory coupled to the processor, where the memory stores instructions that, when executed by the processor, cause the electronic device to perform actions including: S1: acquiring stress information of the electronic system every time interval, and aggregating data of the stress information within a time period to obtain a stress factor, where the stress factor is the impact of the stress information on the component; S2: obtaining a failure rate of each component of the system based on the stress factor and a failure rate algorithm, thereby calculating a failure rate of the system; S3: obtaining the reliability life of the system based on the failure rate of the system and a mean time between failures of the system, to obtain a cumulative damage rate of the system within the time period; and S4: calculating the remaining life of the system based on the nominal life or fatigue life of the system.

Further, the component includes a resistor, a capacitor, a diode, and a transistor, and the stress information includes an ambient temperature, a voltage, and a power of the resistor, an ambient temperature, a voltage, and a power of the capacitor, an ambient temperature and a junction temperature of the diode, and an ambient temperature and a junction temperature of the transistor.

Further, the remaining life assessment method for the electronic system further includes the following action: determining that the time period is a time period when a variation range of the stress factor reaches a variation threshold of the stress factor.

Further, the failure rate algorithm includes an Arrhenius model, an inverse power law model, or an Eyring model.

Further, action S2 further includes:

when the system is a serial architecture, the failure rate of the system is $\lambda_{sys} = \sum_{i=0}^{n} \lambda_i$ , where $\lambda_i$ is the failure rate of the component, and n is a number of components of the system; and

when the system is a parallel architecture, the failure rate of the system is

$$\lambda_{sys} = \cfrac{1}{\sum_{i=0}^{n}\frac{1}{\lambda_i} - \sum_{1<i<j<n}^{n}\frac{1}{\lambda_i+\lambda_j} + \cdots + (-1)^{n-1}\frac{1}{\lambda_1+\lambda_2+\cdots+\lambda_n}}$$ , where $\lambda_1$, $\lambda_2$, $\lambda_i$, $\lambda_i$, $\lambda_j$ and $\lambda_n$ are failure rates of components, and n is the number of components of the system.

Further, the reliability life of the system is:

$$t_R = \frac{\ln[R(t_R)]}{\lambda_{sys}},$$

where $R(t_R)$ is the reliability of the system, and $\lambda_{sys}$ is the failure rate of the system.

Further, the cumulative damage rate of the system within the time period is:

$$D_{tn} = D_{tn-1} + \frac{T_n}{t_R},$$

where $D_{tn-1}$ is a cumulative damage rate of the system within a previous time period, and $t_R$ is the reliability life of a system with reliability R, a value of the reliability R ranging from 0% to 100%.

Further, the remaining life of the system is:

$$RUL = L_{R,nom} \times (1 - D_{tn})$$

where $L_{R,nom}$ is the nominal life of a system with reliability R, a value of the reliability R ranging from 0% to 100%; and $D_{tn}$ is the cumulative damage rate of the system within the time period.

Further, the remaining life of the system is:

$$RUL = L_{R,fatigue} \times (1 - D_{tn}),$$

where $L_{R,fatigue} = \frac{T_{total\_operation}}{D_{tn}}$ , and $L_{R,fatigue}$ is the fatigue life of a system with reliability R, the fatigue life being related to the reliability of the system, and a value of the reliability R ranging from 0% to 100%; $D_{tn}$ is the cumulative damage rate of the system within the time period; and $T_{total\_operation}$ is a total operation time of the system.

A third aspect of the present invention provides a remaining life assessment apparatus for an electronic system, where the electronic system includes at least one electronic component. The remaining life assessment apparatus for the electronic system includes: an acquisition apparatus, which acquires stress information of the electronic system every time interval, and aggregates data of the stress information within a time period to obtain a stress factor, where the stress factor is the impact of the stress information on the component; a first computing apparatus, which obtains a failure rate of each component of the system based on the stress factor and a failure rate algorithm, thereby calculating a failure rate of the system; an obtaining apparatus, which obtains the reliability life of the system based on the failure rate of the system and a mean time between failures of the system, to obtain a cumulative damage rate of the system within the time period; and a second computing apparatus, which calculates the remaining life of the system based on the nominal life or fatigue life of the system.

The present invention is capable of assessing an aging level of the electronic system, which can provide important information for decisions on system maintenance planning. The present invention utilizes an online condition monitoring circuit to assess the remaining life in real time. The present invention utilizes a variable time period $T_n$ to calculate the remaining life of the system to reduce the prediction of the useful life consumption of the electronic device. The present invention can perform a basic function only by using a parameter provided by the manual or the supplier, and therefore it is convenient to use. The present invention can not only calculate the remaining life of the electronic system, but can also detect unexpected situations of the electronic component and trigger an alarm in a timely manner. The present invention can be combined with edge/production line equipment and an industrial cloud, and a user can perform detection with a mobile phone or tablet app and a personal computer. Moreover, the present invention is more scalable and easier to update.

In addition, the present invention has a lower cost, and can be integrated into an existing industrial product, even an existing product with only a basic temperature measurement function. The present invention can reduce the complexity of a detection unit. The prediction of the remaining life of the electronic system of the present invention is implemented based on average conditions, and the present invention can also detect unexpected situations during the working process of the system to detect an extreme state of the system. The data used in the present invention is within a time period that is variable, and an assessment result is updated based on the variable period.

Although the content of the present invention has been described in detail in the preferred embodiments above, it should be appreciated that the description above should not be considered as a limitation on the present invention. Various modifications and substitutions to the present invention will be apparent after perusal of the content above by those skilled in the art. Thus, the scope of protection of the present invention should be defined by the appended claims. Moreover, none of the reference numerals in the claims shall be construed as limiting the claims involved. The term "include/comprise" does not exclude other apparatuses or steps not listed in the claims or the description. The terms "first", "second", etc., are only used to refer to names, and do not denote any particular order.

**Claims**

1. A remaining life assessment method for an electronic system, wherein the electronic system comprises at least one electronic component, and the remaining life assessment method for the electronic system comprises the following steps:

   S1: acquiring stress information of the electronic system every time interval, and aggregating data of the stress information within a time period to obtain a stress factor, wherein the stress factor is the impact of the stress information on the component;
   S2: obtaining a failure rate of each component of the system based on the stress factor and a failure rate algorithm, thereby calculating a failure rate of the system;
   S3: obtaining the reliability life of the system based on the failure rate of the system and a mean time between failures of the system, to obtain a cumulative damage rate of the system within the time period; and
   S4: calculating the remaining life of the system based on the nominal life or fatigue life of the system.

2. The remaining life assessment method for the electronic system as claimed in claim 1, **characterized in that** the component comprises a resistor, a capacitor, a diode, and a transistor, and the stress information comprises an ambient temperature, a voltage, and a power of the resistor, an ambient temperature, a voltage, and a power of the capacitor, an ambient temperature and a junction temperature of the diode, and an ambient temperature and a junction temperature of the transistor.

3. The remaining life assessment method for the electronic system as claimed in claim 1, **characterized in that** the remaining life assessment method for the electronic system further comprises the following step: determining that the time period is a time period when a variation range of the stress factor reaches a variation threshold of the stress factor.

4. The remaining life assessment method for the electronic system as claimed in claim 1, **characterized in that** the failure rate algorithm comprises an Arrhenius model, an inverse power law model, or an Eyring model.

5. The remaining life assessment method for the electronic system as claimed in claim 1, **characterized in that** step S2 further comprises the following steps:

when the system is a serial architecture, the failure rate of the system is $\lambda_{sys} = \sum_{i=0}^{n} \lambda_i$, wherein $\lambda_i$ is the failure rate of the component, and n is a number of components of the system; and
when the system is a parallel architecture, the failure rate of the system is

$$\lambda_{sys} = \cfrac{1}{\sum_{i=0}^{n}\frac{1}{\lambda_i} - \sum_{1<i<j<n}\frac{1}{\lambda_i+\lambda_j} + \cdots + (-1)^{n-1}\frac{1}{\lambda_1+\lambda_2+\cdots+\lambda_n}}$$

, wherein $\lambda_1$, $\lambda_2$, $\lambda_i$, $\lambda_i$, $\lambda_j$ **and** $\lambda_n$ are failure rates of components, and n is the number of components of the system.

6. The remaining life assessment method for the electronic system as claimed in claim 1, **characterized in that** the reliability life of the system is:

$$t_R = \frac{\ln[R(\bar{t}_R)]}{\lambda_{sys}},$$

wherein $R(t_R)$ is the reliability of the system, and $\lambda_{sys}$ is the failure rate of the system.

7. The remaining life assessment method for the electronic system as claimed in claim 1, **characterized in that** the cumulative damage rate of the system within the time period is:

$$D_{tn} = D_{tn-1} + \frac{T_n}{t_R},$$

wherein $D_{tn-1}$ is a cumulative damage rate of the system within a previous time period, and $t_R$ is the reliability life of a system with reliability R, a value of the reliability R ranging from 0% to 100%.

8. The remaining life assessment method for the electronic system as claimed in claim 1, **characterized in that** the remaining life of the system is:

$$RUL = L_{R,nom} \times (1 - D_{tn})$$

wherein $L_{R,nom}$ is the nominal life of a system with reliability R, a value of the reliability R ranging from 0% to 100%; and $D_{tn}$ is the cumulative damage rate of the system within the time period.

9. The remaining life assessment method for the electronic system as claimed in claim 1, **characterized in that** the remaining life of the system is:

$$RUL = L_{R,fatigue} \times (1 - D_{tn}),$$

wherein $L_{R,fatigue} = \frac{T_{total\_operation}}{D_{tn}}$, and $L_{R,fatigue}$ is the fatigue life of a system with reliability R, the fatigue life being related to the reliability of the system, and a value of the reliability R ranging from 0% to 100%; $D_{tn}$ is the cumulative damage rate of the system within the time period; and $T_{total\_operation}$ is a total operation time of the system.

10. A remaining life assessment system for an electronic system, wherein the electronic system comprises at least one electronic component, and the remaining life assessment system for the electronic system comprises:
a processor; and a memory coupled to the processor, where the memory stores instructions that, when executed by the processor, cause the electronic device to perform actions including:

S1: acquiring stress information of the electronic system every time interval, and aggregating data of the stress information within a time period to obtain a stress factor, wherein the stress factor is the impact of the stress information on the component;

S2: obtaining a failure rate of each component of the system based on the stress factor and a failure rate algorithm, thereby calculating a failure rate of the system;

S3: obtaining the reliability life of the system based on the failure rate of the system and a mean time between failures of the system, to obtain a cumulative damage rate of the system within the time period; and

S4: calculating the remaining life of the system based on the nominal life or fatigue life of the system.

11. The remaining life assessment system for the electronic system as claimed in claim 10, **characterized in that** the component comprises a resistor, a capacitor, a diode, and a transistor, and the stress information comprises an ambient temperature, a voltage, and a power of the resistor, an ambient temperature, a voltage, and a power of the capacitor, an ambient temperature and a junction temperature of the diode, and an ambient temperature and a junction temperature of the transistor.

12. The remaining life assessment system for the electronic system as claimed in claim 10, **characterized in that** the remaining life assessment method for the electronic system further comprises the following action: determining that the time period is a time period when a variation range of the stress factor reaches a variation threshold of the stress factor.

13. The remaining life assessment system for the electronic system as claimed in claim 10, **characterized in that** the failure rate algorithm comprises an Arrhenius model, an inverse power law model, or an Eyring model.

14. The remaining life assessment system for the electronic system as claimed in claim 10, **characterized in that** action S2 further comprises:

when the system is a serial architecture, the failure rate of the system is $\lambda_{sys} = \sum_{i=0}^{n} \lambda_i$, wherein $\lambda_i$ is the failure rate of the component, and n is a number of components of the system; and

when the system is a parallel architecture, the failure rate of the system is

$$\lambda_{sys} = \frac{1}{\sum_{i=0}^{n}\frac{1}{\lambda_i} - \sum_{1<i<j<n}\frac{1}{\lambda_i+\lambda_j} + \cdots + (-1)^{n-1}\frac{1}{\lambda_1+\lambda_2+\cdots\lambda_n}}$$, wherein $\lambda_1, \lambda_2, \lambda_i, \lambda_j, \lambda_j,$ **and** $\lambda_n$ are failure rates of components, and n is the number of components of the system.

15. The remaining life assessment system for the electronic system as claimed in claim 10, **characterized in that** the reliability life of the system is:

$$t_R = \frac{\ln[R(t_R)]}{\lambda_{sys}},$$

wherein $R(t_R)$ is the reliability of the system, and $\lambda_{sys}$ is the failure rate of the system.

16. The remaining life assessment system for the electronic system as claimed in claim 10, **characterized in that** the cumulative damage rate of the system within the time period is:

$$D_{tn} = D_{tn-1} + \frac{T_n}{t_R},$$

wherein $D_{tn-1}$ is a cumulative damage rate of the system within a previous time period, and $t_R$ is the reliability life of a system with reliability R, a value of the reliability R ranging from 0% to 100%.

17. The remaining life assessment system for the electronic system as claimed in claim 10, **characterized in that** the remaining life of the system is:

$$RUL = L_{R,nom} \times (1 - D_{tn})$$

wherein $L_{R,nom}$ is the nominal life of a system with reliability R, a value of the reliability R ranging from 0% to 100%; and $D_{tn}$ is the cumulative damage rate of the system within the time period.

18. The remaining life assessment system for the electronic system as claimed in claim 10, **characterized in that** the remaining life of the system is:

$$RUL = L_{R,fatigue} \times (1 - D_{tn}),$$

wherein $L_{R,fatigue} = \dfrac{T_{total\_operation}}{D_{tn}}$ , and $L_{R,fatigue}$ is the fatigue life of a system with reliability R, the fatigue life being related to the reliability of the system, and a value of the reliability R ranging from 0% to 100%; $D_{tn}$ is the cumulative damage rate of the system within the time period; and $T_{total\_operation}$ is a total operation time of the system.

19. A remaining life assessment apparatus for an electronic system, wherein the electronic system comprises at least one electronic component, and the remaining life assessment apparatus for the electronic system comprises:

an acquisition apparatus, which acquires stress information of the electronic system every time interval, and aggregates data of the stress information within a time period to obtain a stress factor, wherein the stress factor is the impact of the stress information on the component;
a first computing apparatus, which obtains a failure rate of each component of the system based on the stress factor and a failure rate algorithm, thereby calculating a failure rate of the system;
an obtaining apparatus, which obtains the reliability life of the system based on the failure rate of the system and a mean time between failures of the system, to obtain a cumulative damage rate of the system within the time period; and
a second computing apparatus, which calculates the remaining life of the system based on the nominal life or fatigue life of the system.

Failure rate

FIG. 1

EP 4 105 856 A1

FIG. 2

FIG. 3

16

Stress factor

FIG. 4

Ambient temperature

FIG. 5

FIG. 6

## INTERNATIONAL SEARCH REPORT

| International application No. |
| --- |
| **PCT/CN2021/082147** |

| A. | CLASSIFICATION OF SUBJECT MATTER |
| --- | --- |
| | G06Q 10/00(2012.01)i |

According to International Patent Classification (IPC) or to both national classification and IPC

| B. | FIELDS SEARCHED |
| --- | --- |

Minimum documentation searched (classification system followed by classification symbols)

G06Q; G06F

Documentation searched other than minimum documentation to the extent that such documents are included in the fields searched

Electronic data base consulted during the international search (name of data base and, where practicable, search terms used)

CNABS; SIPOABS; DWPI; CNTXT; WOTXT; EPTXT; USTXT; CJFD; CNKI: 剩余, 使用, 寿命, 估计, 评估, 预测, 估算, 时间, 间隔, 应力, 失效率, 故障, 可靠, 安全, 累积, 积累, 额定, 运行, 疲劳, 损伤, 损害, 串行, 并行, 模型, remaining, useful, life, related, rating, evaluate, forecast, time, interval, stress, failure, reliable, safe, accumulate, running, fatigue, degradation, loss, damage, serial, parallel, model

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 101266840 A (BEIHANG UNIVERSITY) 17 September 2008 (2008-09-17) entire document | 1-19 |
| A | CN 110955963 A (NANJING UNIVERSITY OF AERONAUTICS AND ASTRONAUTICS) 03 April 2020 (2020-04-03) entire document | 1-19 |
| A | US 2007295098 A1 (CHESTER L. B.) 27 December 2007 (2007-12-27) entire document | 1-19 |
| A | US 8340923 B2 (ORACLE AMERICA, INC.) 25 December 2012 (2012-12-25) entire document | 1-19 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 November 2021** | **01 December 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| Patent document cited in search report | | | Publication date (day/month/year) | Patent family member(s) | | | Publication date (day/month/year) |
|---|---|---|---|---|---|---|---|
| CN | 101266840 | A | 17 September 2008 | CN | 101266840 | B | 23 May 2012 |
| CN | 110955963 | A | 03 April 2020 | | None | | |
| US | 2007295098 | A1 | 27 December 2007 | EP | 2035806 | A2 | 18 March 2009 |
| | | | | US | 7454297 | B2 | 18 November 2008 |
| | | | | WO | 2007149150 | A2 | 27 December 2007 |
| | | | | WO | 2007149150 | A3 | 03 April 2008 |
| | | | | EP | 2035806 | B1 | 01 August 2012 |
| US | 8340923 | B2 | 25 December 2012 | US | 2011246093 | A1 | 06 October 2011 |

Form PCT/ISA/210 (patent family annex) (January 2015)